Europäisches Patentamt

European Patent Office

Office européen des brevets

(19)

(11) **EP 0 892 585 A2**

(12) **EUROPÄISCHE PATENTANMELDUNG**

(43) Veröffentlichungstag:
20.01.1999 Patentblatt 1999/03

(51) Int. Cl.$^6$: **H05B 6/14**, H05B 6/06

(21) Anmeldenummer: 98112928.1

(22) Anmeldetag: 11.07.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **16.07.1997 DE 19730531**

(71) Anmelder:
**Zinser Textilmaschinen GmbH
D-73058 Ebersbach/Fils (DE)**

(72) Erfinder: **Olszowka, Henryk
73119 Zell unter Aichelberg (DE)**

(54) **Verfahren und Vorrichtung zur Bestimmung der Temperatur eines induktiv beheizten Elements**

(57)    Die Erfindung betrifft ein Verfahren zur Bestimmung der Temperatur eines induktiv beheizten Elements, vorzugsweise einer Galette einer Spinnereimaschine zur Herstellung von synthetischen Fäden, wobei das beheizte Element (1) eine Sekundär-Heizwicklung aufweist oder darstellt, in welcher mittels einer stromdurchflossenen Primärwicklung das Element (1) beheizende Induktionsströme erzeugt werden, wobei in einem Eichvorgang die Primärwicklung mit einer vorbestimmten konstanten Primärspannung ($U_0$) beaufschlagt wird und ein erstes Wertepaar eines Stromwerts ($I_1$) durch die Primärwicklung und der zugehörigen Temperatur ($T_1$) sowie wenigstens ein weiteres Wertepaar eines Stromwerts ($I_2$) durch die Primärwicklung und der zugehörige Temperatur ($T_2$) gemessen werden sowie aus den wenigstens zwei Wertepaaren (($I_1, T_1$), ($I_2, T_2$)) eine Eichabhängigkeit $F_0(U_x/I_x)$ bei der vorbestimmten Spannung ($U_0$) ermittelt wird, und wobei in der Betriebsphase die Temperatur des beheizten Elements (1) die Ist-Primärspannung ($U_x$) und der Ist-Stromwert ($I_x$) durch die Primärwicklung oder damit gekoppelter Größen gemessen und die zugehörige Ist-Temperatur (T) aus der Beziehung $T = F_0(U_x/I_x) + \Delta T(U_x - U_0)$ ermittelt wird, wobei $\Delta T(U_x - U_0)$ eine rein spannungsabhängigen Korrekturabhängigkeit darstellt. Des Weiteren betrifft die Erfindung eine Vorrichtung zur Durchführung des Verfahrens.

Fig. 2

**Beschreibung**

Die Erfindung betrifft ein Verfahren und eine Vorrichtung zur Bestimmung der Temperatur eines induktiv beheizten Elements, vorzugsweise einer Galette einer Spinnereimaschine zur Herstellung von synthetischen Fäden.

Bei Spinnereimaschinen zur Herstellung von Kunstfasern, beispielsweise Streckspul- oder Streckzwirnmaschinen ist es erforderlich, die Temperatur der mit den synthetischen Fäden in Kontakt stehenden Oberfläche der Galette innerhalb gewisser Toleranzen auf die gewünschte Temperatur einzustellen und (bei konstanter Arbeitsgeschwindigkeit) konstant zu halten. Hierzu wird bei bekannten Spinnereimaschinen üblicherweise ein Sensor zur Erfassung der Temperatur der Galettenoberfläche verwendet, dessen Signal einer Regelschaltung zugeführt ist. Diese steuert ein Heizelement an der Galette oder die Wärmeübertragung von einem Heizelement bzw. einer Heizeinheit außerhalb der Galette auf die Galette so, dass die gewünschte Solltemperatur erreicht und innerhalb der geforderten Grenzen gehalten wird. Für die Anordnung des Temperatursensors sind verschiedene Möglichkeiten bekannt. So kann der Temperatursensor in dem Mantel der Galette eingebettet sein (DE-OS 21 08 825). Hierbei wird jedoch nur eine Stelle des Umfangs der Galette abgetastet, so dass Bereiche unterschiedlicher Temperatur auf der Galettenoberfläche nicht erkannt werden. Aus diesem Grund finden in der Praxis auch ringförmige Temperatursensoren Verwendung, welche in einer Nut in der Innenfläche des Galettenmantels integriert sind (DE-OS 1 901 902). Diese beseitigen zwar den vorgenannten Nachteil, jedoch muss das Sensorsignal nach wie vor von der rotierenden Galette auf die ortsfeste Maschine übertragen werden. Dies ist mit einem entsprechenden schaltungstechnischen Aufwand bzw. bei einer Signalübertragung mittels Schleifern mit der Gefahr von mechanischen Defekten bzw. bei einer drahtlosen Signalübertragung mit der Gefahr des Auftretens von Störungen verbunden.

Aus der DE 40 24 432 C2 ist ein Verfahren zur Ermittlung der Temperatur eines induktiv beheizten Maschinenteils bekannt, bei der das beheizte Element eine Sekundär-Heizwicklung aufweist oder darstellt, in der mittels einer Primär-Wicklung das Element beheizende Induktionsströme erzeugbar sind. Die Bestimmung der Temperatur des beheizten Elements wird bei diesem Verfahren durch die Messung des Eingangstroms der Primärwicklung und durch die Messung der in einer Sekundär-Messwicklung erzeugten Spannung bestimmt. Dabei werden in einem Eichvorgang einerseits der ohmsche Widerstand $R_2$ des beheizten Maschinenteils bzw. Heizelements in Abhängigkeit von dessen Temperatur T gemessen und daraus eine Funktion $T = f_T(R_2)$ errechnet und abgespeichert und andererseits der Strom $I_L$ durch die Hauptinduktivität in Abhängigkeit vom Spannungsabfall $U_L$ an der Hauptinduktivität gemessen und daraus eine Funktion $I_L = f_L(U_L)$ errechnet und abgespeichert. Als Maß für den Spannungsabfall an der Hauptinduktivität wird die in der Sekundär-Messwicklung induzierte Spannung verwendet. Im Betrieb wird dann die Temperatur T nach der Formel $T = f_T \cdot [U_L/(I_A - f_L(U_L))]$ berechnet.

Dieses Verfahren weist jedoch den Nachteil auf, das zum einen eine Mess-Sekundärwicklung erforderlich ist und zum anderen müssen im Eichvorgang eine Vielzahl von Punkten messtechnisch bestimmt werden, um die Temperaturabhängigkeit des ohmschen Widerstands des beheizten Elements zu ermitteln. Gleiches gilt für die Messung des Stroms durch die Hauptinduktivität in Abhängigkeit vom Spannungsabfall an der Hauptinduktivität.

Ausgehend von dem letztgenannten Stand der Technik liegt der vorliegenden Erfindung die Aufgabe zugrunde, ein Verfahren und eine Vorrichtung zur Bestimmung der Temperatur eines induktiv beheizten Elements, vorzugsweise einer Galette einer Spinnereimaschine zur Herstellung von synthetischen Fäden, zu schaffen, wobei die Temperatur des beheizten Elements auf einfache Weise und ohne großen Rechenaufwand bestimmbar ist und wobei eine Eichung des Verfahrens bzw. der Vorrichtung mit geringem Aufwand durchgeführt werden kann.

Die Erfindung löst diese Aufgabe mit den Merkmalen der Patentansprüche 1 bzw. 6.

Die Erfindung geht von der Erkenntnis aus, dass die Ist-Temperatur T des induktiv beheizten Elements auf einfache Weise durch die Messung der Ist-Primärspannung $U_x$ und des Ist-Stroms $I_x$ durch die Primärwicklung oder damit gekoppelter Größen unter Verwendung der Beziehung

$$T = F_0(U_x/I_x) + \Delta T(U_x - U_0)$$

bestimmt werden kann. Durch Messreihen an verschiedenen Galetten konnte gezeigt werden, dass zwar abhängig von verschiedenen Parametern bei unterschiedlichen Galetten unterschiedliche Verläufe der (funktionalen oder empirischen) Abhängigkeit $F_0(U_x/I_x)$ auftreten, dass diese Kurven jedoch abhängig von der (als konstanten angenommenen) Spannung $U_x$ an der Primärwicklung in hervorragender Näherung durch reine Parallelverschiebungen in Richtung der T-Achse darstellbar sind. Mit anderen Worten, die Temperatur des beheizten Elements kann auf einfache Weise durch die Messung der Größen $U_x$ und $I_x$ ermittelt werden, wobei hierzu in einem Eichvorgang lediglich für eine konstante Spannung $U_x = U_0$ die funktionale Abhängigkeit $F_0(U_x/I_x)$ bestimmt und zur Temperaturberechnung im Fall einer Spannung $U_x \neq U_0$ durch die rein spannungsabhängige Korrekturabhängigkeit $\Delta T(U_x - U_0)$ korrigiert werden muss.

Bei der bevorzugten Aufführungsform der Erfindung wird die Eichabhängigkeit $F_0$ dargestellt als $T = A \cdot U_x/I_x + B$, d. h. als Gerade mit der Steigung A und dem Ordinatenabschnitt (der Temperaturachse) B. Durch Messreihen konnte gezeigt werden, dass diese lineare Näherung der funktionalen Abhängigkeit $F_0$ hervorragende Ergebnisse liefert und für die geforderte Genauigkeit der Temperatureinstellung von ca. $\pm 1$ K bei weitem ausreicht.

Die Steigung A der linearen Abhängigkeit kann mit geringstem Aufwand durch die Ermittlung von lediglich zwei Wertepaaren $(I_1, T_1)$ und $(I_2, T_2)$ bei einer konstanten Spannung $U_x = U_0$ berechnet werden zu $A = (T_2 - T_1)/(U_0/I_2 - U_0/I_1)$. Der Ordinatenabschnitt B ergibt sich zu $(U_0/I_2 \cdot T_1 - U_0/I_1 \cdot T_2)/(U_0/I_2 - U_0/I_1)$.

Selbstverständlich besteht jedoch auch die Möglichkeit, die Parameter A und B durch die Bestimmung mehrerer Punkte und durch lineare Ausgleichsrechnung zu ermitteln.

Dieser Eichvorgang zur Bestimmung der funktionalen Abhängigkeit $F_0$ kann somit auf einfache Weise bei Bedarf oder in bestimmten zeitlichen Abständen vom Anwender der betreffenden Spinnereimaschine durchgeführt werden.

In der Praxis hat sich gezeigt, dass bei ein und dem selben Galettentyp abhängig von Fertigungstoleranzen der Galette und unterschiedlichen Eigenschaften der Heizung zwar unterschiedliche Verläufe der funktionalen Abhängigkeit $F_0$, d.h unterschiedliche Werte für die Steigung A und den Ordinatenabschnitt B auftreten, dass jedoch die Korrekturabhängigkeit $\Delta T(U_x - U_0)$ weitgehend unveränderlich ist.

Dies bietet die Möglichkeit, die Bestimmung der Korrekturabhängigkeit $\Delta T$ einmalig vom Hersteller der Spinnereimaschine durchführen zu lassen und die betreffende Abhängigkeit fest in der Vorrichtung zur Bestimmung der Temperatur abzuspeichern.

Selbstverständlich kann jedoch auch die Bestimmung dieser Abhängigkeit bei Bedarf oder in bestimmten zeitlichen Abständen (auch vom Anwender der Spinnereimaschine) wiederholt werden.

Hierzu ist es möglich, den Verlauf der Korrekturabhängigkeit durch die messtechnische Bestimmung einer Vielzahl von Punkten $(T_i, U_i/I_i)$ bei $U_i \neq U_0$ aufzunehmen und den Verlauf von $\Delta T_I$ durch die Beziehung $\Delta T_i = T_i - F_0(U_i/I_i)$ zu ermitteln und abzuspeichern oder ggf. aus den Messpunkten durch Interpolation oder Ausgleichsrechnung eine funktionale Abhängigkeit zu ermitteln und zu speichern.

Da die Abhängigkeit $\Delta T_i$ in der Praxis annähernd linear ist, genügt es im einfachsten Fall, zusätzlich zur Eichabhängigkeit $F_0$ wenigstens ein Wertepaar $(T_I, U_I/I_I)$ bei $U_I \neq U_0$ zu ermitteln und hieraus den Wert $\Delta T_I = T_I - F_0(U_I/I_I)$ zu berechnen. Für beliebige $U_x$ kann $\Delta T(U_x - U_0)$ dann durch Interpolation/Extrapolation berechnet werden (mit $\Delta T(0) = 0$).

In der Praxis hat sich gezeigt, dass es wegen der leichten Krümmung des Verlaufs von $\Delta T$ vorteilhafter ist, einen Punkt $(T_I, U_I/I_I)$ bei $U_I > U_0$ und einen Punkt $(T_{II}, U_{II}/I_{II})$ bei $U_{II} < U_0$ zu ermitteln und im Bereich $U_x > U_0$

zwischen den Punkten $\Delta T_0$ und $\Delta T_I$ zu interpolieren und im Bereich $U_x < U_0$ zwischen den Punkten $\Delta T_0$ und $\Delta T_{II}$. Denn die Abhängigkeit $\Delta T(U_x - U_0)$ kann wiederum, zumindest für kleine Spannungsbereiche $U_x - U_0$ mit hoher Genauigkeit durch eine Gerade angenähert werden.

Weitere Ausführungenformen der Erfindung ergeben sich aus den Unteransprüchen.

Die Erfindung wird nachfolgend anhand in der Zeichnung dargestellter Ausführungsbeispiele näher erläutert. In der Zeichnung zeigen:

Fig. 1     eine erste Ausführungsform einer Vorrichtung zur Bestimmung der Temperatur eines induktiv beheizbaren Elements nach der Erfindung;

Fig. 2     eine zweite Ausführungsform der erfindungsgemäßen Vorrichtung;

Fig. 3     ein Diagramm zur Erläuterung des Verlaufs der Temperatur T des beheizten Elements als Funktion des Verhältnisses $U_x/I_x$ für unterschiedliche Spannungen $U_x$;

Fig. 4     ein Diagramm zur Erläuterung der spannungsabhängigen Korrekturabhängigkeit $\Delta T(U_x - U_0)$.

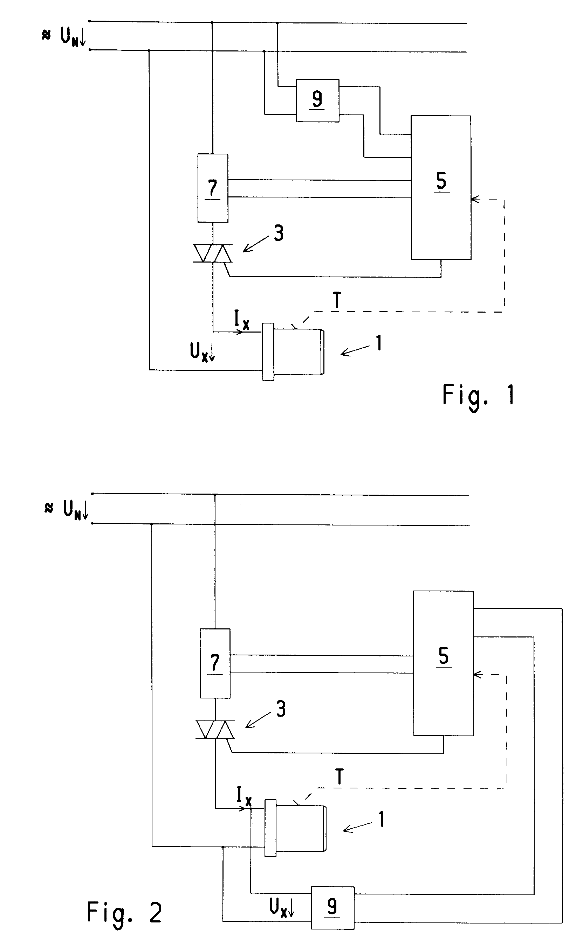

Fig. 1 zeigt eine Vorrichtung zur Bestimmung der Temperatur eines induktiv beheizten Elements 1, welches im gezeigten Ausführungsbeispiel als Galette einer Spinnereimaschine dargestellt ist. Das Element bzw. die Galette 1 umfasst eine nicht näher dargestellte Primärwicklung, welche mit einer Spannungsversorgung verbunden ist, die eine Versorgungswechselspannung $U_N$ liefert. Die Primärwicklung der Galette 1 ist in üblicher Weise über einen steuerbaren elektronischen Schalter 3, beispielsweise einen Thyristor, mit der Versorgungswechselspannung $U_N$ verbunden. Der steuerbare elektronische Schalter 3 wird von einer Steuer- und Auswerteeinheit 5 angesteuert.

Die Ansteuerung erfolgt vorzugsweise, wie bei bekannten Vorrichtungen üblich, in der Weise, dass die Primärwicklung der Galette 1 mit einem bestimmten Tastverhältnis mit der Versorgungswechselspannung $U_N$ verbunden wird, so dass während der Einschaltzeiten $t_e$ an der Primärwicklung der Galette die Spannung $U_x$ anliegt. Die Spannung an der Primärwicklung $U_x$ ist idealer Weise gleich der Versorgungswechselspannung $U_N$, wird in der Praxis aufgrund des Einschaltwiderstands des elektronischen Schalters 3 jedoch geringfügig unter der Spannung $U_N$ liegen.

Der während der Einschaltzeiten $t_e$ durch die Primärwicklung fliesende Strom $I_x$ wird durch eine Strom-Messeinrichtung 7 erfasst. Der erfasste Wert wird der Steuer- und Auswerteeinheit 5 zugeführt. Die Strom-Messeinrichtung 7 kann beispielsweise als Strom-/Spannungs-Wandler ausgebildet sein, so dass der Steuer- und Auswerteeinheit 5 eine dem Strom $I_x$ proportionale Spannung zugeführt wird.

Des Weiteren wird die Spannung $U_N$ durch eine Spannungs-Messeinrichtung 9 erfasst, wobei die erfasste Spannung oder eine hierzu proportionale Größe ebenfalls der Steuer- und Auswerteeinheit 5 zugeführt wird.

Die direkte Erfassung der Versorgungsspannung $U_N$, welche im Wesentlichen der an der Primärwicklung anliegenden Spannung $U_x$ proportional ist, bietet den Vorteil, dass bei einer Maschine mit mehreren Galetten bzw. beheizbaren Elementen 1 lediglich eine einzige Spannungs-Messeinrichtung 9 erforderlich ist.

Allerdings birgt diese Ausführungsform den geringfügigen Nachteil, dass im Fall unterschiedlicher Einschaltwiderstände der steuerbaren Schalter 3 bzw. unterschiedlicher Einfügewiderstände der Strom-Messeinrichtungen 7 nicht die korrekte, an der jeweiligen Primärwicklung anliegende Spannung $U_x$ erfasst wird. In der Regel können diese Ungenauigkeiten in der Praxis jedoch toleriert werden.

Soll jedoch die Spannung $U_x$ jeder Primärwicklung einer Galette bzw. eines beheizbaren Elements 1 separat erfasst werden, so muss, wie in Fig. 2 dargestellt, für jedes separate beheizbare Element 1 eine eigene Spannungs-Messeinrichtung vorgesehen werden oder, was in der Regel vorteilhafter sein wird, eine einzige Spannungs-Messeinrichtung eingesetzt werden, welche eingangsseitig eine Multiplexeinrichtung aufweist, welcher sämtliche Spannungen $U_x$ sämtlicher Galetten 1 zugeführt sind. Die Spannungs-Messeinrichtung 9 kann dann im Zeitmultiplex nacheinander die Spannungen $U_x$ der einzelnen Galetten erfassen und der Steuer- und Auswerteeinheit 5 zuführen.

Für das nachstehend beschriebene Verfahren zur Eichung der Vorrichtung bzw. zur Bestimmung der Temperatur der Galette 1 spielt es im Fall eines einzigen beheizten Elements 1 keine Rolle, ob unmittelbar die Spannung $U_x$ an der Primärwicklung oder die Versorgungsspannung $U_N$ erfasst wird, da selbst bei Vorhandensein eines Einschaltwiderstands des steuerbaren Schalters 3 bzw. eines Einfügewiderstands der Strom-Messeinrichtung 7 die Spannung $U_x$ im Wesentlichen proportional der Spannung $U_N$ sein wird.

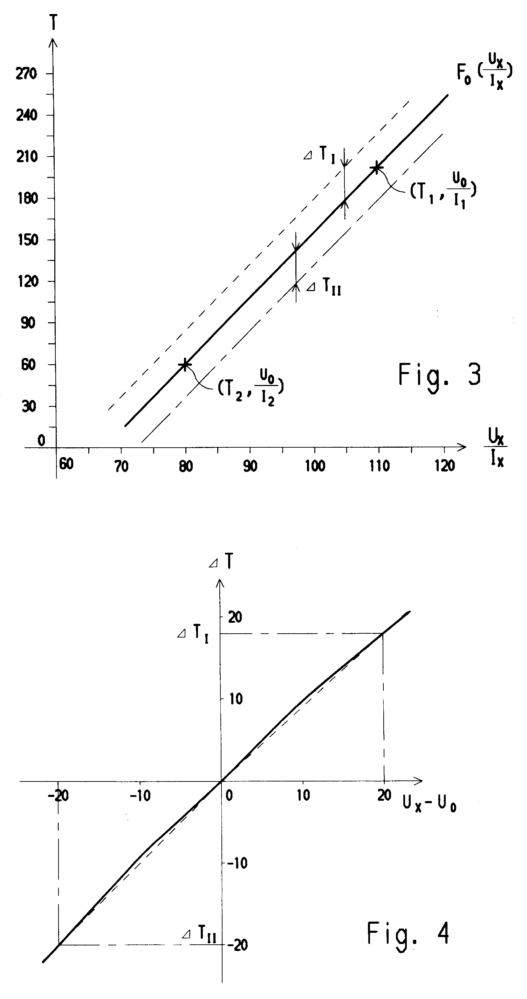

Nachstehend wird anhand der Fig. 3 und Fig. 4 das Verfahren zur Bestimmung der Temperatur der Galette bzw. des beheizbaren Elements 1 erläutert.

Grundsätzlich wird davon ausgegangen, dass die Temperatur des beheizten Elements 1 dargestellt werden kann durch die Beziehung $T = F_0(U_x/I_x) + \Delta T(U_x - U_0)$. Dabei beinhaltet die Eichabhängigkeit $F_0(U_x/I_x)$ die Temperatur des beheizten Elements als Funktion des Verhältnisses $U_x/I_x$ bei einer konstanten Spannung $U_x = U_0$.

Fig. 3 zeigt den Verlauf der Eichabhängigkeit $F_0$, welche für eine Spannung $U_x = U_0$ gleich der Temperatur $T_x$ des beheizbaren Elements ist.

Der Verlauf der Eichabhängigkeit $F_0$ kann dadurch ermittelt werden, dass bei konstanter Spannung $U_x$ jeweils die Temperatur des beheizten Elements 1 abhängig vom Stellgrad s erfasst wird. Der Stellgrad s ist dabei definiert als das Verhältnis der Einschaltzeit $t_e$ des elektronischen Schalters 3 dividiert durch die Periodendauer des Einschaltvorgangs. Die maximale Temperatur wird sich somit bei einem Stellgrad s = 1 ergeben (bzw. bei einem maximal zulässigen Stellgrad) und die minimale Temperatur bei einem Stellgrad s = 0 (bzw. bei einem minimal zulässigen Stellgrad).

Für den Eichvorgang kann somit der Verlauf der Eichabhängigkeit $F_0$ einfach dadurch ermittelt werden, dass der Stellgrad langsam von einem minimalen Stellgrad kontinuierlich oder stufenweise bis zu einem maximalen Stellgrad erhöht wird und eine bestimmte Anzahl von Punkten $(T, U_x/I_x)$ für eine konstante Spannung (vorzugsweise die mittlere Betriebsspannung) $U_x = U_0$ ermittelt werden. Hierzu kann ein nicht näher dargestellter Temperatursensor üblicher Bauart verwendet werden, welcher die Oberflächentemperatur des beheizten Elements 1 erfasst (in den Fig. 1 und 3 strichliert dargestellt).

Da, wie aus Fig. 3 ersichtlich, der Verlauf der Eichabhängigkeit $F_0$ praktisch linear ist, genügt es im einfachsten Fall lediglich zwei Punkte $(T_1, U_0/I_1)$ bzw. $(T_2, U_0/I_2)$ zu ermitteln und hieraus die Steigung A und den Ordinatenabschnitt B der Gerade $T = A \cdot U_x/I_x + B$ zu berechnen.

Selbstverständlich können zur Steigerung der Genauigkeit mehrere Punkte der Eichabhängigkeit ermittelt und die Parameter A, B der Geraden durch lineare Ausgleichsrechnung bestimmt werden.

Es hat sich gezeigt, dass für einen bestimmten Typ beheizbarer Elemente zwar unterschiedliche Verläufe der Eichabhängigkeit $F_0$ auftreten, dass jedoch die Korrekturabhängigkeit $\Delta T(U_x - U_0)$ praktisch unabhängig von Fertigunsparametern oder Eigenschaften der betreffenden Bauelemente sind. Mit anderen Worten bei einer konstanten Spannung an der Primärwicklung ergibt sich selbst bei einer gegenüber der Eichspannung $U_0$ abweichenden Betriebsspannung (im Rahmen von Spannungsschwankungen) lediglich eine Verschiebung der Kurve der Eichabhängigkeit $F_0$ in Richtung der Temperaturachse.

Dies ist in Fig. 3 durch die strichliert bzw. strichgepunktet dargestellten Kurven angedeutet, wobei sich die strichliert dargestellte Kurve für eine konstante Betriebsspannung $U_x > U_0$ und strichgepunktet dargestellte Kurve für eine Betriebsspannung $U_x < U_0$ ergibt.

Zur Ermittlung der Temperaturabhängigkeit bei einer gegenüber der Eichspannung $U_0$ geänderten Spannung, genügt es daher lediglich ein einziges Wertepaar $(T_l, U_l/I_l)$ zu ermitteln und hieraus den Korrekturwert $\Delta T_l = T_l - F_0(U_l/I_l)$ zu berechnen.

Um die Spannungsabhängigkeit der Korrekturabhängigkeit $\Delta T(U_x - U_0)$ zu ermitteln, können selbstverständlich über den in der Praxis auftretenden Bereich

von Spannungsschwankungen $\Delta U = U_x - U_0$ in der vorbeschriebenen Weise eine Vielzahl von Werten $\Delta T(\Delta U)$ ermittelt und abgespeichert bzw. hieraus eine funktionale Abhängigkeit ermittelt und diese abgespeichert werden.

Wie in Fig. 4 dargestellt, zeigt sich jedoch, dass die Korrekturabhängigkeit $\Delta T(\Delta U)$ sich ebenfalls mit relativ guter Näherung (zumindest in Bereichen $\Delta U < 20$ Volt bei einer Versorgungsspannung von $U_N = 230$ V) durch eine Linearisierung darstellen lässt.

In der Praxis bietet sich beispielsweise an, ausgehend von der mittleren Betriebsspannung $U_N = U_0$ (z.B. 230 V) lediglich Korrekturwerte $\Delta T_I$ (z.B. für $\Delta U = +20$ V) und $dT_{II}$ (für $\Delta U = -20$V) zu ermitteln und für den Bereich $\Delta U > 0$ zwischen den Punkten $\Delta T_0 = 0$ und $\Delta T_I$ zu interpolieren bzw. extrapolieren und für den Bereich $\Delta U < 0$ zwischen den Punkten $\Delta T_0 = 0$ und $\Delta T_{II}$.

Insgesamt zeigt die Korrekturabhängigkeit $\Delta T$ als Funktion von $U_x - U_0$ einen leicht gekrümmten Verlauf, wie in Fig. 4 dargestellt.

## Patentansprüche

1. Verfahren zur Bestimmung der Temperatur eines induktiv beheizten Elements, vorzugsweise einer Galette einer Spinnereimaschine zur Herstellung von synthetischen Fäden,

   a) wobei das beheizte Element (1) eine Sekundär-Heizwicklung aufweist oder darstellt, in welcher mittels einer stromdurchflossenen Primärwicklung das Element (1) beheizende Induktionsströme erzeugt werden,

   b) wobei in einem Eichvorgang die Primärwicklung mit einer vorbestimmten konstanten Primärspannung $(U_0)$ beaufschlagt wird und

      b1) ein erstes Wertepaar eines Stromwerts $(I_1)$ durch die Primärwicklung und der zugehörigen Temperatur $(T_1)$ sowie wenigstens ein weiteres Wertepaar eines Stromwerts $(I_2)$ durch die Primärwicklung und der zugehörige Temperatur $(T_2)$ gemessen werden sowie

      b2) aus den wenigstens zwei Wertepaaren $((I_1, T_1), (I_2, T_2))$ eine Eichabhängigkeit $F_0(U_x/I_x)$ bei der vorbestimmten Spannung $(U_0)$ ermittelt wird, und

   c) wobei in der Betriebsphase die Temperatur des beheizten Elements (1) die Ist-Primärspannung $(U_x)$ und der Ist-Stromwert $(I_x)$ durch die Primärwicklung oder damit gekoppelter Größen gemessen und die zugehörige Ist-Temperatur $(T)$ aus der Beziehung

$$T = F_0(U_x/I_x) + \Delta T(U_x - U_0)$$

ermittelt wird, wobei $\Delta T(U_x - U_0)$ eine rein spannungsabhängigen Korrekturabhängigkeit darstellt.

2. Verfahren nach Anspruch 1, bei dem die Eichabhängigkeit dargestellt ist als

$$T = A \cdot U_x/I_x + B$$

3. Verfahren nach Anspruch 2, bei dem Steigung A durch lineare Interpolation/Extrapolation zwischen zwei Wertepaaren $(I_1, T_1)$, $(I_2, T_2)$ dargestellt ist durch $(T_2 - T_1)/(U_0/I_2 - U_0/I_1)$ und die Konstante B durch $(U_0/I_2 \cdot T_1 - U_0/I_1 \cdot T_2)/(U_0/I_2 - U_0/I_1)$.

4. Verfahren nach einem der vorhergehenden Ansprüche, bei dem in einem weiteren Eichvorgang die Korrekturabhängigkeit $\Delta T(U_x - U_0)$ ermittelt wird durch Bestimmung wenigstens Wertepaars $(T_I, U_I/I_I)$, bei $U_I \neq U_0$ mit $\Delta T_I = T_I - F_0(U_I/I_I)$ und durch Ermittlung einer funktionalen Abhängigkeit unter Verwendung der ermittelten Werte $\Delta T_1$;

5. Verfahren nach einem der vorhergehenden Ansprüche, bei dem die Korrekturabhängigkeit für jedes beheizbare Element einmalig bestimmt und gespeichert wird und bei dem der Eichvorgang gemäß den Merkmal b), b1), b2) des Anspruchs 1 bearfsweise oder in vorbestimmten zeitlichen Abständen wiederholt wird.

6. Vorrichtung zur Bestimmung der Temperatur eines induktiv beheizbaren Elements, vorzugsweise einer Galette einer Spinnereimaschine zur Herstellung von Kunstfasern,

   a) wobei das beheizte Element (1) eine Sekundär-Heizwicklung aufweist oder darstellt, in welcher mittels einer stromdurchflossenen Primärwicklung das Element (1) beheizende Induktionsströme erzeugbar sind,

   b) mit einer Strom-Messeinrichtung (7) zur Erfassung des der Primärwicklung zugeführten Stroms (I) oder einer damit gekoppelten Größe,

   c) mit einer Spannungs-Messeinrichtung (9) zur Erfassung der an der Primärwicklung anliegenden Spannung $(U_x)$ oder einer damit gekoppelten Größe und

   d) mit einer Auswerteeinheit (5), welcher die Signale der Strom- und Spannungs-Messeinrichtungen (7, 9) zugeführt sind und welche die Temperatur (T) des beheizbaren Elements (1) nach dem Verfahren nach den vorhergehenden Ansprüchen ermittelt.

7. Vorrichtung nach Anspruch 6, bei der mehrere beheizbare Elemente (1) parallel mit einer gemeinsamen Spannungsquelle verbunden sind und die Spannungs-Messeinrichtung (9) die Spannung der gemeinsamen Spannungsquelle erfasst.

8. Vorrichtung nach Anspruch 6, bei der mehrere beheizbare Elemente (1) mit einer gemeinsamen Spannungsquelle verbunden sind und die Spannungs-Messeinrichtung (9) separat die an jeder Primärwicklung anliegende Spannung erfasst.

Fig. 1

Fig. 2

Fig. 3

Fig. 4